## Europäisches Patentamt
## European Patent Office
## Office européen des brevets

(19)

(11) Numéro de publication: **0 131 520**
**A1**

(12)

# DEMANDE DE BREVET EUROPEEN

(21) Numéro de dépôt: **84401443.1**

(22) Date de dépôt: **06.07.84**

(51) Int. Cl.⁴: **A 01 G 9/16**

(30) Priorité: **07.07.83 FR 8311365**

(43) Date de publication de la demande:
**16.01.85 Bulletin 85/3**

(84) Etats contractants désignés:
**BE CH DE GB IT LI NL**

(71) Demandeur: **Lesage, Gérard Jean**
**La Chataigneraie**
**F-53340 Preaux(FR)**

(72) Inventeur: **Lesage, Gérard Jean**
**La Chataigneraie**
**F-53340 Preaux(FR)**

(74) Mandataire: **Derambure, Christian**
**Cabinet BUGNION ASSOCIES SARL 116, boulevard**
**Haussmann**
**F-75008 Paris(FR)**

(54) **Châssis-tunnel utilisé notamment pour horticulture.**

(57) L'invention concerne un châssis-tunnel, destiné plus particulièrement à l'horticulture, comportant un cadre démontable (2) restant sur le sol et portant, par des moyens de soutien temporaires (4), une pluralité d'arceaux (5) supportant un film (6) en matiére synthétique tranparente les bords du film étant fixés aux côtés du cadre (2) par des moyens de fixation temporaires (3).

FIG.1

**EP 0 131 520 A1**

" Châssis-tunnel utilisé notamment pour horticulture "

L'invention concerne un châssis-tunnel, destiné plus particulièrement à l'horticulture.

On connaît déjà des tunnels qui sont constitués d'arceaux, dont chacune des parties extrêmes est fichée dans le sol, et qui sont placés parallélement les uns aux autres, à une distance donnée, et qui supportent un film en matière synthétique. Le film est tendu entre les arceaux et ses bords longitudinaux opposés sont enterrés, tandis que les extrémités transversales du film sont retenues par un ou plusieurs piquets. En général, le film de matière synthétique est un film de polyéthylène transparent aux rayons solaires.

De tels tunnels sont cependant assez mal commodes, du point de vue de leur montage et de leur utilisation . Par ailleurs, ils sont fixes et ne peuvent être déplacés lorsque la culture qui est réalisée sous un tel tunnul est parvenue à un stade qui ne nécessite plus la présence d'une protection.

On connaît, par ailleurs, des châssis qui sont constitués d'un cadre rigide, fixe, qui est posé, à même la terre. Ce cadre rigide fixe est réalisé, par exemple, en bois et il supporte un cadre mobile qui est transparent à la lumière solaire. Ce cadre mobile peut pivoter longitudinalement, par rapport au cadre rigide, à l'aide d'une charnière placée sur un côté longitudinal du cadre rigide fixe. Le cadre mobile support une pluralité de vitres ou une seule vitre, ou encore un film en matière synthétique transparente.

Ces châssis, qui sont couramment utilisés dans les jardins d'amateurs présentent cependant un inconvénient : ils sont volumineux et en outre l'espace l'espace qui se trouve entre le cadre mobile et le cadre rigide fixe, est réduit, le cadre mobile reposant sur le cadre rigide qui lui, a une hauteur de quelques dizaines de centimètres. Par conséquent, les cultures qui peuvent être entreprises dans un tel châssis ne peuvent être que des cultures de faible hauteur, comme des semis ou boutures.

De plus, les châssis de la technique antérieure sont fixes et ne peuvent être déplacés.

L'invention vise donc à pallier ces inconvénients.

Un but de l'invention est de fournir un dispositif qui soit facile à monter, et notamment pour un utilisateur tel qu'un jardinier amateur, qui soit léger, qui puisse être déplacé facilement, et par ailleurs, qui puisse se vendre en "kit".

Pour parvenir à ce but, l'invention concerne un châssis tunnel, caractérisé par le fait qu'il comporte, en combinaison, un cadre démontable, muni de moyens de fixation temporaires, d'un film en matière synthétique transparente, et des moyens de soutien temporaires d'une pluralité d'arceaux sur lesquels repose le film.

Par cadre démontable, on entend une structure qui est constituée d'éléments modulaires, et qui peuvent être assemblés, au gré de l'utilisateur par des moyens de solidarisation. Par exemple, le cadre démontable est préférentiellement constitué de deux longerons parallèles et deux traverses parallèles, deux à deux, les longerons et les traverses étant réunis par des moyens de solidarisation temporaires. Les moyens de solidarisation sont actifs lorsque le châssis-tunnel est utilisé et sont inactifs lorsque le châssis-tunnel est démonté.

Par exemple, les longerons sont constitués de planches préférentiellement, en matière synthétique, ayant une forme parallélépipédique et des traverses ayant elles aussi une forme parallélépipédique, mais l'épaisseur des longerons et des traverses étant faible, par rapport à leur longueur.

Les moyens de fixation temporaires du film en matière synthétique transparente sont, par exemple, constitués d'une rainure qui est longitudinale et qui se trouve sur la face externe des longerons et des traverses, la rainure étant telle que le film vient se placer à l'intérieur, et est maintenu par un boudin longitudinal élastique, qui vient s'emboîter à force dans la rainure.

Des moyens de solidarisation temporaires des longerons et des traverses sont constitués par une équerre qui est fixée, respectivement sur un longeron et la traverse adjacente,par un boulon.

Les moyens de soutien des arceaux qui sont des moyens eux aussi temporaires, sont constitués par des trous borgnes réalisés sur le chant supérieur des traverses et des longerons, les parties extrêmes des arceaux

venant s'emboîter dans lesdits trous borgnes.

Plus préférentiellement, les arceaux sont constitués d'une part, d'arceaux médians, de longueur L, et d'autre part d'arceaux d'extrémité, de longueur 1, la longueur L des arceaux médians étant supérieure à la longueur 1 des arceaux d'extrémité.

Enfin, les parties extrêmes des arceaux médians sont enfoncées dans des trous borgnes, dont l'un est situé sur un longeron, et dont l'autre est situé sur le longeron opposé.

Au contraire, les parties extrêmes des arceaux d'extrémité sont enfoncées dans des trous borgnes qui sont tous deux situés sur la même traverse.

La description suivante, en regard des dessins annexés à titre d'exemple non limitatif, permettra de comprendre comment l'invention peut être mise en pratique.

- la figure 1 est une vue générale du châssis tunnel, selon l'invention,
- la figure 2 est une vue en coupe, selon le plan II-II du châssis tunnel, de la figure 1,
- la figure 3 est un détail d'un longeron, ainsi que des moyens de soutien et de fixation temporaires.

Le châssis tunnel 1, selon la présente invention, comporte donc en combinaison un cadre démontable 2, muni de moyens de fixation 3, d'un film en matière synthétique transparente, et de moyens de soutien 4, d'une pluralité d'arceaux 5, sur lesquels repose le film 6.

Les moyens de fixation 3, ainsi que les moyens de soutien 4 sont des moyens temporaires. Ainsi, les moyens de fixation 3 et les moyens de soutien 4 sont actifs lorsque le châssis-tunnel est utilisé, et sont inactifs lorsque le châssis-tunnel est démonté.

Le cadre 2 est constitué de deux longerons 7, 8 qui sont parallèles, et deux traverses 9, 10 qui sont aussi parallèles l'une à l'autre. Chaque traverse et chaque longeron sont réunis par des moyens de solidarisation 11.

Une traverse est constituée, par exemple, d'une plaque plane, de longueur A, de hauteur H et d'épaisseur $e$. Par exemple, on peut prévoir que la longueur $a$ est de quelques mètres, notamment 3 à 5 mètres, que la hauteur est de quelques décimètres, par exemple 2 à 3 décimètres tandis que l'épaisseur est de quelques centimètres, par exemple 7 à 10 centimètres.

Des traverses 3 ont une longueur $b$, une hauteur $h$, et une épaisseur $e$. La hauteur des traverses et des longerons est sensiblement égale, ainsi que l'épaisseur des traverses et des longerons. Par contre, la longueur $a$ des longerons est nettement supérieure à la longueur $b$ des traverses, par exemple, les longerons peuvent avoir une longueur qui soit le double ou le triple de la longueur $b$ des traverses.

Les longerons et les traverses sont réalisés, plus préférentiellement en une matière synthétique, ou en une matière naturelle, telle que le bois.

Chaque longeron 7, 8 est réuni, de part et d'autre, de ces parties extrêmes, à une traverse 9, 10 par des moyens de solidarisation 11. Ces moyens de solidarisation 11 sont, eux aussi temporaires, à savoir ils sont actifs lorsque le châssis-tunnel est monté et inactifs lorsque le chassis-tunnel est en pièces détachées.

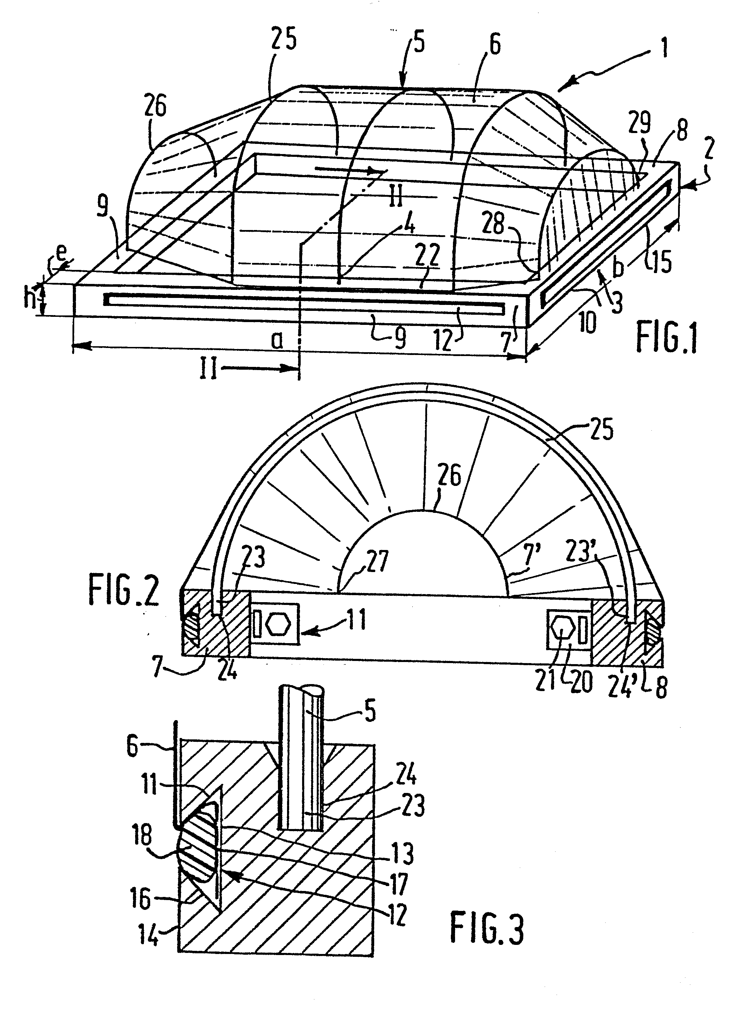

Les moyens de fixation 3 sont constitués par une rainure externe, longitudinale 12, réalisée dans les longerons et les traverses. Plus préfétentiellement, la rainure 12 est réalisée sur la surface du longeron ou de la traverse qui est dirigée vers l'extérieur, du châssis-tunnel 1. Comme on le voit, plus particulièrement, sur la figure 3 une telle rainure 12 comporte un fond 13, parallèle à la surface 14 délimitée par la longueur $a$ et la hauteur $h$ d'un longeron et respectivement la surface formée par la longueur $b$ du longeron et sa hauteur $h$.

La rainure 12 comporte, en outre, deux ailes 15, 16 formant un angle aigu $\alpha$ avec le fond 13. Ainsi, on peut dire que, le fond 13 de la rainure 12, la surface 14 et les ailes 15 et 16 ont une forme sensiblement en oméga.

L'extrémité libre 7 du film 6 est donc introduite dans la rainure 12, et dans cette rainure 12, vient ensuite s'emboîter à force un boudin longitudinal 18 élastique, qui maintient le film dans la rainure 12. Par conséquent, l'extrémité 17 du film est maintenue entre le fond 13 de la rainure 12 et le boudin 18.

Les moyens de solidarisation temporaires 11 sont constitués, selon la présente invention, par une équerre 20, qui est fixée respectivement sur un longeron 7, 8 et la traverse adjacente 9, 10 par un boulon 21.

Selon la présente invention, les moyens de soutien temporaires 4 des arceaux 5 sont réalisés sur le chant supérieur 22 des traverses 7, 8 des longerons 9, 10. Plus préférentiellement, les moyens de soutien sont constitués par des trous borgnes 23 réalisés et percés dans le champ supérieur des traverses et longerons, ᴄᴇ chant étant délimité par l'épaisseur $e$ et par les longueurs $a$ et $b$ respectivement. L'extrémité libre 24 des arceaux 5 vient se placer ou s'emboîter à force
dans le trou borgne 23. Par conséquent, chaque arceau
est maintenu par ses extrémités libres qui sont introduites
dans des trous borgnes.

Plus préférentiellement, les arceaux 5 sont constitués
d'une part, par des arceaux médians 25, de longueur L
et d'autre part, par des arceaux d'extrémité 26,
de longueur $\underline{1}$, L étant supérieure à $\underline{1}$.

Les parties extrêmes 23, 23' des arceaux médians sont
enfoncées dans des trous borgnes 24, 24' (voir figure 2)
dont l'un est situé sur un longeron 9 et dont l'autre
est situé sur le longeron opposé 10. Ainsi, les arceaux
médians 25 forment sensiblement un arc de cercle de
rayon égal à $\dfrac{L}{2\pi}$ .

Les parties extrêmes 27, 27' des arceaux médians 26
d'extrémité sont enfoncées dans des trous borgnes 28,
29 qui sont situés tous deux sur la même traverse 8, 9.
Par conséquent, les arceaux d'extrémité ont un rayon
qui est égal à la moitié de la distance $\underline{d}$ entre les
trous borgnes 28 et 29. $\underline{d}$ étant inférieure à $\underline{1}$.

Enfin, selon l'invention, les arceaux médians et les
arceaux d'extrémité sont constitués d'une matière synthétique souple et flexible.

Lorsque le châssis-tunnel, selon la présente invention
est démonté, il est constitué de pièces indépendantes
à savoir des longerons 7, 8, traverses 9, 10, boudins
18 longitudinaux, arceaux 25 et 26 qui sont rectilignes
et le film 6 plan et flexible, en matière synthétique
ainsi que équerre 20 et boulon 21.

Le procédé de montage d'un tel châssis-tunnel 1 est
tel que l'on réunit d'abord les longerons 7, 8 avec les traverses 9, 10 aux moyens des équerres 20 et écrous 21, puis que l'on courbe les arceaux 25, 26 et que l'on enfonce leurs extrémités libres dans les trous borgnes 23 respectifs. Enfin, on place le film 6 sur les arceaux et l'on introduit les extrémités libres du film dans les rainures des traverses et des longerons et l'on coince les extrémités libres du film, à l'aide des boudins 18 que l'on introduit, à force dans les rainures, les boudins étant alors déformés, plus ou moins.

Par conséquent, le châssis-tunnel, selon l'invention peut être livré à l'utilisateur en "kit" et il peut être facilement monté par ce dernier. En outre, un avantage de ce châssis-tunnel est qu'il peut être déplacé aisément.

REVENDICATIONS

1.     Châssis-tunnel comportant, en combinaison, un cadre démontable (2) muni de moyens de fixation temporaires (3) d'un film (6) en matière synthétique transparente et de moyens de soutien temporaires (4) d'une pluralité d'arceaux (5) sur lesquels repose le film (6), le cadre (2) étant constitué de deux longerons (7, 8) parallèles l'un à l'autre, et de deux traverses (9, 10) parallèles l'une à l'autre, lesdits longerons et lesdites traverses étant réunis par des moyens de solidarisation temporaires (11), caractérisé par le fait que les moyens de fixation (3) sont constitués par une rainure (12) externe longitudinale réalisée respectivement dans les longerons (7, 8) et les traverses (9, 10), un boudin longitudinal (18) venant s'emboîter à force dans chacune des rainures, ledit boudin étant élastique et étant déformé lorsqu'il est introduit dans la rainure pour ainsi maintenir le film (6) entre la rainure (12) et le boudin longitudinal (18).

2.     Châssis-tunnel selon la revendication 1, caractérisé par le fait que les moyens de solidarisation (11) sont constitués par une équerre (20) fixée respectivement sur un longeron (7, 8) et la traverse (9, 10) adjacente, et ce par un boulon (21).

3.     Châssis-tunnel selon l'une quelconque des revendications 1 à 2, caractérisé par le fait que les moyens de soutien temporaires (4) des arceaux (5) sont constitués par des trous borgnes (23) réalisés sur le chant supérieur (22) des traverses (7, 8) et longerons (9, 10), les extrémités libres (23) des arceaux (5) venant se placer et s'emboîter dans lesdits trous borgnes (23).

4. Châssis-tunnel selon l'une quelconque des revendications 1 à 3, caractérisé par le fait que les arceaux (5) sont constitués d'une part, d'arceaux médians (25) de longueur L et d'autre part, d'arceaux d'extrémité (26) de longueur $\underline{l}$, la longueur L des arceaux médians étant supérieure à la longueur $\underline{l}$ des arceaux d'extrémité.

5. Châssis-tunnel selon l'une quelconque des revendications 1 à 4, caractérisé par le fait que les parties extrêmes (23, 23') des arceaux médians (25) sont introduites à force dans des trous borgnes (24, 24') dont l'un est situé sur un longeron (7) et dont l'autre est situé sur le longeron opposé (8).

6. Châssis-tunnel selon l'une quelconque des revendications 1 à 5, caractérisé par le fait que les parties extrêmes (27, 27') des arceaux d'extrémité (26) sont enfoncés dans des trous borgnes (28, 29) situés sur la même traverse (9, 10).

7. Châssis-tunnel selon la revendication 6, caractérisé par le fait que les trous borgnes (28, 29) sont distants d'une longueur $\underline{d}$, inférieure à la longueur des traverses.

8. Châssis-tunnel selon l'une quelconque des revendications 1 à 7, caractérisé par le fait que le film est constitué en polyéthylène transparent aux rayons solaires.

9. Châssis-tunnel selon l'une quelconque des revendications 1 à 8, caractérisé par le fait que les rainures (12) sont constituées d'un fond (13) parallèle à la surface externe respectivement des longerons et des traverses, par deux ailes (15, 16) formant un angle aigu avec le fond (13), lesdites rainures ayant donc sensiblement une forme, en oméga.

FIG.1

FIG.2

FIG.3

Office européen
des brevets

RAPPORT DE RECHERCHE EUROPEENNE

0131520
Numéro de la demande

EP 84 40 1443

8503

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| A | AT-B- 355 849 (KLEBLACH)<br>* En entier * | 1,3,5 | A 01 G 9/16 |
| A | FR-A-2 434 564 (BRUYANT)<br>* Page 1, ligne 1 - page 2, ligne 11; figures 1,2 * | 1,3,5 | |
| A | US-A-4 188 764 (GODE)<br>* Colonne 4, ligne 6 - colonne 5, ligne 20; figures 1,4 * | 1 | |
| A | FR-A-1 432 172 (CONTINENTAL TREUHAND- UND REVISIONSGESELLSCHAFT)<br>* Page 2, colonne de gauche, dernier paragraphe - page 3, colonne de gauche, paragraphe 3; figures 1-5 * | 1,9 | |

DOMAINES TECHNIQUES
RECHERCHES (Int. Cl. 3)

A 01 G

Le présent rapport de recherche a été établi pour toutes les revendications

| Lieu de la recherche | Date d'achèvement de la recherche | Examinateur |
|---|---|---|
| LA HAYE | 15-10-1984 | HERYGERS J.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03.82